# EUROPEAN PATENT APPLICATION

(11) **EP 3 213 814 A1**
(43) Date of publication of application: **06.09.2017**
(21) Application number: 16158029.5
(22) Date of filing: 01.03.2016
(51) Int. Cl.: B01J 20/24, B01J 20/04, C08B 37/00

(54) **NOVEL SORBENT AND/OR CATALYST COMPOSITION**

(71) Applicant: Antecy B.V., 3871 KM Hoevelaken (NL)
(72) Inventor: O'Connor, Paul, 3871KM Hoevelaken (NL); Marinic, Sasa, 3892AC Zeewolde (NL); van Putten, Gerrit, 3825VT Amersfoort (NL)

(57) **Abstract**

The present invention relates to Cellulose and/or Lignin used as catalyst and/or sorbent support, carrier and/or binder, leading to strong but flexible structures such as porous monoliths, wire mesh or shaped particles which can accommodate variations in catalyst and/or sorbent loadings as well as temperature and pressure fluctuations and humidity swings, this without loss of sorption capacity and mechanical integrity to prevent attrition, fines, losses etc. This Cellulose and/or Lignin catalyst and/or sorbent can be produced from waste biomass and can be recycled, reused, dissolved and re-precipitated making use of solvents like ZnCL2/ZnO and anti-solvents.

## Description

### Technical Field

High loadings of sorbents and/or catalysts particles or structures (porous monoliths, wire mesh, shaped particles) in combination with temperature, pressure and humidity variations
can lead to mechanical stress of the particles or structures leading to loss of mechanical integrity such as attrition, fines and losses etc. This invention contributes by comprising cellulose and/or lignin as a catalyst and/or sorbent support, carrier and/or binder, leading to strong but flexible structures which accommodate these variations.

### Background Art

High structural strength

A flexible structure (elasticity)

High number of active and/or sorbent sites.

### Flowable.

### Low cost

### Recyclable.

### Summary of invention

Using Cellulose and/or Lignin as catalyst and/or sorbent support, carrier and/or binder, leading to strong but flexible structures which can accommodate variations in catalyst and/or sorbent loadings and temperature, pressure and humidity fluctuations. These Cellulose and/or Lignin catalyst and/or sorbent can be produced from waste biomass and can be recycled, reused, dissolved and re-precipitated making use of solvents like ZnCL2/ZnO and anti-solvents.

### Description of embodiments

K, Na, Sr, Carbonates on Cellulose for capturing of CO2 from air and/or flue Gas.

Combination of Cellulose and Lignin (modifying the basicity of the support).

Combination with inorganic supports/binders: Si, Al, Ti, Mg, Al-Mg.

Combination with organics such as amines .

Cellulose and Lignin can be produced from waste biomass (e.g. BIOeCON process making use of ZnCl2/ZnO molten salt as solvent).

Catalyst/Sorbent can be Recycled and reused, dissolved and re-precipitated making use of solvents, such as ZnCl2/ZnO (BIOeCON) and anti-solvents.

### Industrial applicability

Good elastic strength.

Stable up to T ± 250 degrees Celsius.

Bio-degradable

Recyclable and Non-polluting.

Water insoluble.

Humidity swings proof.

Use as adsorbent for capturing of CO2 from air and/or flue Gas.

Use as carrier for adsorbing other components from Gas at temperatures less than 300 degrees Celsius.

Use as catalyst carrier for reactions at moderate temperatures (less than 300 degrees Celsius).

## Claims

1. Cellulose and/or Lignin as catalyst and or sorbent support, carrier and/or binding system for strong and flexible structures to accommodate the variations in catalyst and/or sorbent loadings, pressure and humidity swings and temperature fluctuations.

2. The material of claim 1 wherein the Cellulose and/or Lignin catalyst/sorbent is loaded with a combination of inorganic binders as Si, Al, Ti, Mg, Al-Mg.

3. The material of claim 1 wherein the Cellulose and/or Lignin catalyst/sorbent is loaded with K, Na, Sr or Carbonates.

4. The material of claim 1 wherein the Cellulose and/or Lignin catalyst/sorbent is loaded with a combinations of organics such as amines.

5. The material of claim 1 wherein the Cellulose and Lignin is produced from waste biomass.

6. The material of claim 1 wherein the Cellulose and Lignin is produced from waste biomass, particular with the use of a molten salt as ZnCL2/ZnO as solvent.

7. The material of claim 1 wherein the Cellulose and/or Lignin catalyst/sorbent can be recycled and reused, dissolved and re-precipitated by making use of solvents such as ZnCL2/ZnO and anti-solvents.

8. The material of claim 1 wherein the cellulose and/or lignin catalyst and/or sorbent is used as support, carrier and/or binder for strong and flexible structures for capturing CO2 from air and/or flue gases.

9. The material of claim 1 wherein the cellulose and/or lignin catalyst/sorbent is used as support, carrier and/or binder for strong and flexible structures, for adsorbing other components from Gas at temperatures less than 300 degrees Celsius.

10. The material of claim 1 wherein the cellulose and/or lignin catalyst/sorbent is used as support, carrier and/or binder for strong and flexible structures as catalyst carrier for reactions at moderate temperatures (less than 300 degrees Celsius).
